(19) Europäisches Patentamt
European Patent Office
Office européen des brevets

(11) **EP 4 672 144 A1**

(12) **EUROPEAN PATENT APPLICATION**

(43) Date of publication:
**31.12.2025 Bulletin 2026/01**

(21) Application number: 25183272.1

(22) Date of filing: **17.06.2025**

(51) International Patent Classification (IPC):
*G06T 7/292* (2017.01)

(52) Cooperative Patent Classification (CPC):
**G06T 7/292;** G06T 2207/30196; G06T 2207/30232;
G06T 2207/30241

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.06.2024 JP 2024105197**

(71) Applicant: **FUJITSU LIMITED**
**Kawasaki-shi, Kanagawa 211-8588 (JP)**

(72) Inventor: **CHO MAR, Cho**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **TRAJECTORY GENERATION PROGRAM, TRAJECTORY GENERATION METHOD, AND INFORMATION PROCESSING APPARATUS**

(57) A trajectory generation program causes a computer (100,200) to execute a process including generating a fragmentary trajectory based on the acquired analysis result calculating a feature amount regarding an appearance of the person based on a plurality of image frames associated with the generated fragmentary trajectory generating a plurality of representative clusters by clustering a plurality of specified fragmentary trajectories using a similarity of representative values of the calculated feature amounts of the plurality of image frames generating a plurality of subclusters obtained by clustering each of the plurality of clustered trajectories in each of the generated representative clusters using representative values of a plurality of poses of the person and setting the plurality of trajectories corresponding to the subcluster as a fragmentary trajectory of the same person based on a result of the plurality of generated subclusters.

FIG.2

**Description**

FIELD

The embodiment discussed herein is directed to a trajectory generation program and the like.

BACKGROUND

There is a multi-camera tracking system that tracks an object, a person, or the like as a target in a designated application region using a plurality of cameras. In a multi-camera tracking system in the related art, object detection, intra-camera tracking, camera calibration, and inter-camera tracking are executed to generate trajectory information. In the present specification, a case where a person is tracked will be described, but an object other than a person can be similarly applied.

In the object detection processing, a target person is detected, key points are extracted, and body parts are classified. In the intra-camera tracking processing, a plurality of persons is tracked by one camera. In the camera calibration processing, the position of the person is predicted, and mapping is performed on a map. In the inter-camera tracking processing, a plurality of pieces of trajectory information is generated by extracting a Re-Identification (ReID) feature amount and integrating each ReID feature amount.

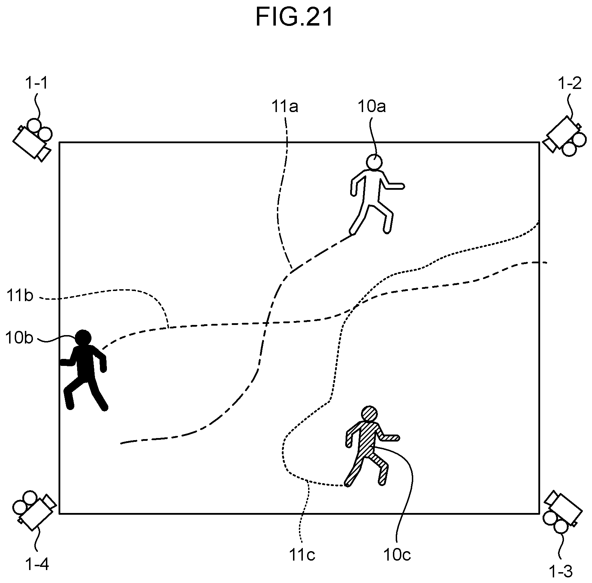

FIG. 21 is a diagram for describing an example of trajectory information. In the example illustrated in FIG. 21, a plurality of cameras 1-1, 1-2, 1-3, and 1-4 is installed. For example, according to the related art, trajectory information 11a of a person 10a is generated, trajectory information 11b of a person 10b is generated, and trajectory information 11c of a person 10c is generated.

Note that, in order to improve tracking accuracy, there is also a related art of combining anchor-guided clustering and spatiotemporal consistency ID reassignment in addition to the multi-camera tracking system.

For example, in the anchor-guided clustering, an anchor serving as a clustering reference is selected, and other data points are clustered with the anchor as a reference. At the time of clustering, it is determined whether or not the data point is assigned to the same cluster as the anchor on the basis of a distance between the anchor and the data point and a threshold value.

Patent Literature 1: Japanese Laid-open Patent Publication No. 2024-008869
Patent Literature 2: U.S. Patent No. 11024043
Patent Literature 3: U.S. Patent Application Publication No. 2021/0240851
Patent Literature 4: Japanese Laid-open Patent Publication No. 2019-185615

However, in the above-described related art, there is a problem that the trajectory information is not able to be accurately generated.

Accordingly, it is an object in one aspect of an embodiment of the present invention to provide a trajectory generation program, a trajectory generation method, and an information processing apparatus that are capable of accurately generating trajectory information.

SUMMARY

According to an aspect of an embodiment, a trajectory generation program causes a computer (100,200) to execute a process including acquiring an analysis result of an image frame in which a person is included, for each camera that has captured the image frame generating a fragmentary trajectory of the person included in the image frame based on the acquired analysis result calculating a feature amount regarding an appearance of the person based on a plurality of image frames associated with the generated fragmentary trajectory generating a plurality of representative clusters by clustering a plurality of specified fragmentary trajectories using a similarity of representative values of the calculated feature amounts of the plurality of image frames generating a plurality of subclusters obtained by clustering each of the plurality of clustered trajectories in each of the generated representative clusters using representative values of a plurality of poses of the person and setting the plurality of trajectories corresponding to the subcluster as a fragmentary trajectory of the same person based on a result of the plurality of generated subclusters.

BRIEF DESCRIPTION OF DRAWINGS

FIG. 1 is a diagram for describing a problem of the related art;

FIG. 2 is a diagram illustrating an information processing system according to the present embodiment;

FIG. 3A is a diagram for describing preprocessing executed by an information processing apparatus according to the present embodiment;

FIG. 3B is a diagram illustrating an example of global optimization processing;

FIG. 4 is a diagram for describing ID transfer;

FIG. 5 is a flowchart illustrating a processing procedure of ID transfer error removal processing;

FIG. 6 is a diagram for describing first outlier removal processing and second outlier removal processing;

FIG. 7 is a diagram for describing a relationship between Z-scores and outliers;

FIG. 8 is a diagram illustrating a processing result of ID transfer error removal processing;

FIG. 9 is a flowchart illustrating a processing procedure of optimized hierarchical clustering processing;

FIG. 10 is a flowchart illustrating a processing procedure of pose-oriented grouping processing;

FIG. 11 is a diagram (1) for describing pose classification;

FIG. 12 is a diagram (2) for describing pose classification;

FIG. 13 is a diagram for describing subclustering;

FIG. 14 is a flowchart illustrating a processing procedure of error suppression processing;

FIG. 15 is a diagram for describing the error suppression processing;

FIG. 16 is a diagram illustrating tracklets before and after execution of the error suppression processing;

FIG. 17 is a functional block diagram illustrating a configuration of an information processing apparatus according to the present embodiment;

FIG. 18 is a flowchart illustrating a processing procedure of the information processing apparatus according to the present embodiment;

FIG. 19 is a flowchart illustrating a processing procedure of preprocessing;

FIG. 20 is a diagram illustrating an example of a hardware configuration of a computer that implements functions similar to those of the information processing apparatus according to the embodiment; and

FIG. 21 is a diagram for describing an example of trajectory information.

DESCRIPTION OF EMBODIMENTS

Preferred embodiments of the present invention will be explained with reference to accompanying drawings. Note that the present invention is not limited by the embodiments.

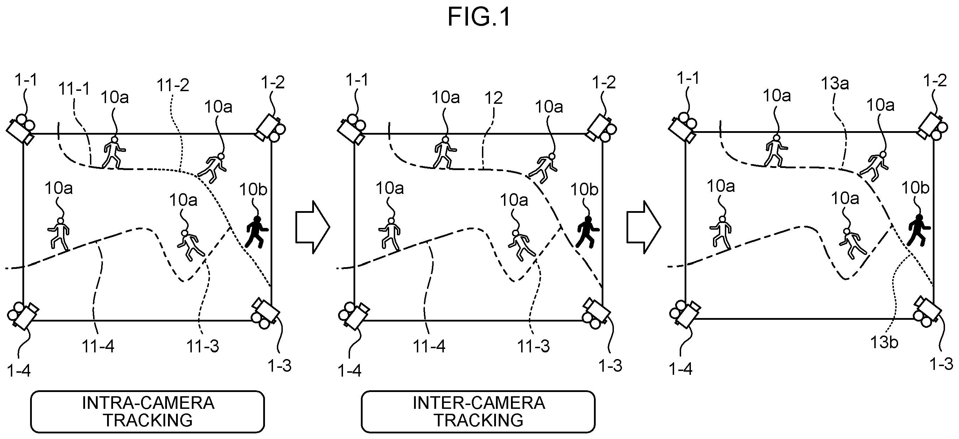

Before describing the present embodiment, problems of the related art will be described more specifically. FIG. 1 is a diagram for describing a problem of the related art. In the following description, a device that executes processing related to the related art is referred to as a "device in the related art". In addition, an image captured by a camera is referred to as a "frame". The camera generates a sequence of time-series frames.

In the intra-camera tracking, since a plurality of persons is tracked by one camera, a plurality of tracklets is generated for each camera. The tracklet is fragmentary trajectory information of the person.

For example, the device in the related art generates a tracklet 11-1 of a person 10a on the basis of frames of a camera 1-1. The device in the related art generates a tracklet 11-2 of the person 10a on the basis of frames of a camera 1-2. Note that the device in the related art erroneously integrates a tracklet of a person 10b into the tracklet of the person 10a.

The device in the related art generates a tracklet 11-3 of a person 10a on the basis of frames of a camera 1-3. The device in the related art generates a tracklet 11-4 of the person 10a on the basis of frames of a camera 1-4.

In the intra-camera tracking, tracklet of a person are generated by focusing on each camera, and the tracklets of the same person generated on the basis of frames of each camera are not integrated.

The device in the related art performs inter-camera tracking after intra-camera tracking. In the inter-camera tracking, the tracklets are integrated by one process on the basis of an average of feature amounts (positions and the like) of the tracklets separately created for each camera. However, when the integration fails due to lack of information or the like, the complete trajectory information of the person is not able to be generated.

In the example illustrated in FIG. 1, in the device in the related art, the tracklet 11-1 and the tracklet 11-2 are integrated to generate a tracklet 12 of the person 10a. Note that the tracklet of the person 10b remains connected in the tracklet 12. In addition, the device in the related art fails to integrate the tracklets 11-3 and 11-4 due to lack of information or the like.

As described in FIG. 1, in the related art, tracklets that appear in the same camera and overlap in time remain connected. In addition, in the related art, since the respective tracklets are integrated by one process on the basis of the average of the feature amounts related to the tracklets, there is no opportunity to integrate the tracklets that are not able to be integrated due to lack of information or the like.

It is required to solve the above-described problems of the related art, integrate the tracklets of each person, and accurately generate trajectory information of each person. For example, in FIG. 1, the appropriate trajectory information of the person 10a is a tracklet 13a. In addition, the appropriate trajectory information of the person 10b is a tracklet 13b.

Note that, in the anchor-guided clustering disclosed in the related art, since an anchor specific threshold value is set for each data set, the processing depends on the data set, and the trajectory information is not able to be efficiently generated.

The problems of the related art have been described above.

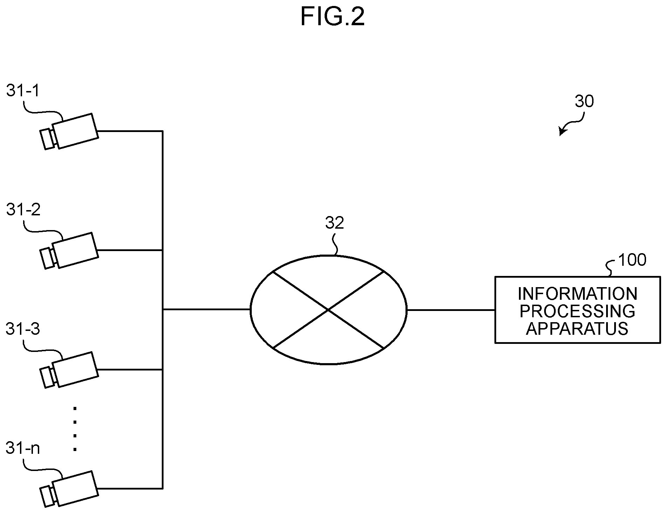

Next, an example of an information processing system according to the present embodiment will be described. FIG. 2 is a diagram illustrating the information processing system according to the present embodiment. As illustrated in FIG. 2, an information processing system 30 includes cameras 31-1, 31-2, 31-3,..., and 31-n, and an information processing apparatus 100. The cameras 31-1 to 31-n (n is any natural number) and the information processing apparatus 100 are connected to each other via a network 32.

For example, various communication networks such as an intranet used in a store such as a retail shop can be adopted as the network 32 regardless of whether the networks are wired or wireless. In addition, the network 32 is not a single network, and for example, an intranet and the Internet may be configured via a network device such as a gateway or another device (not illustrated). Note that the expression "in a store" such as a retail store is not limited to indoor, and may be a facility including the outdoors on a site such as a retail shop.

The cameras 31-1 to 31-n are monitoring cameras installed in each sales room or cash register area in a store such as a retail shop. In the following description, the cameras 31-1 to 31-n may be collectively referred to as a camera 31. Video data captured by the camera 31 is transmitted to the information processing apparatus 100 via the network 32. The video data includes a sequence of time-series frames.

The information processing apparatus 100 is an apparatus that generates trajectory information of a person on the basis of time-series frames. Hereinafter, an example of processing of the information processing apparatus 100 will be described. For example, the information processing apparatus 100 generates the trajectory information of the person by executing global optimization processing (Global Optimization) after performing the preprocessing.

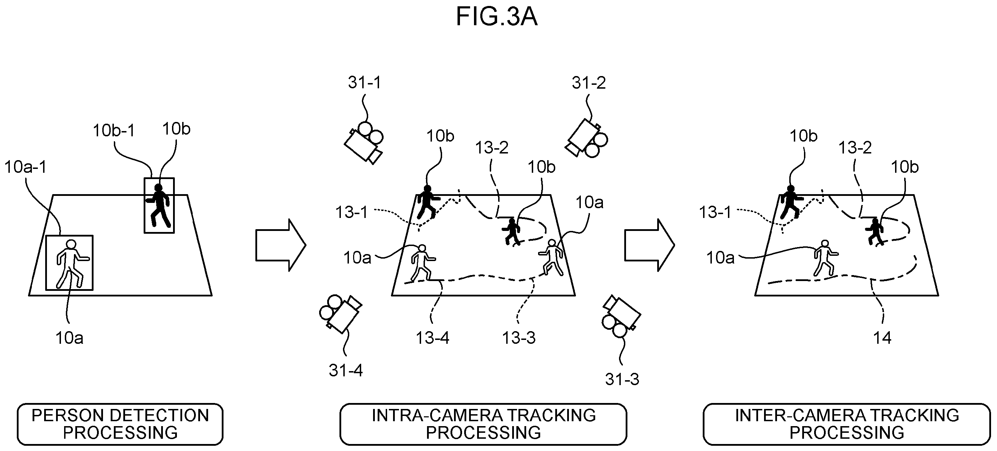

An example of the preprocessing executed by the information processing apparatus 100 will be described. FIG. 3A is a diagram for describing the preprocessing executed by the information processing apparatus according to the present embodiment. As illustrated in FIG. 3A, the information processing apparatus 100 sequentially executes, as the preprocessing, person detection processing, intra-camera tracking processing, and inter-camera tracking processing.

The person detection processing executed by the information processing apparatus 100 will be described. The information processing apparatus 100 acquires time-series frames from the camera 31. The frame corresponds to an "image frame". The information processing apparatus 100 extracts a person from the frame using an existing detection algorithm such as YOU Only Look Once (YOLO). The extracted person is indicated by a bounding box (BBOX) that rectangularly surrounds a region on the frame. For example, FIG. 3A illustrates a bounding box 10a-1 of the person 10a and a bounding box 10b-1 of the person 10b. In addition, the information processing apparatus 100 extracts key points of the persons 10a and 10b. The information processing apparatus 100 calculates positional information corresponding to the key points of the person using parameters of the camera 31 that has captured the frames.

The information processing apparatus 100 repeatedly executes the above processing for the time-series frames. A detection result by the person detection processing is generated for each camera 31.

The intra-camera tracking processing executed by the information processing apparatus 100 will be described. The information processing apparatus 100 generates a tracklet for each camera on the basis of a result of the person detection processing (BBOX of a person in time series). For example, the information processing apparatus 100 repeatedly executes processing of specifying the same person between frames on the basis of a similarity degree of the BBOX of the person between a plurality of frames, and generates a tracklet. For specifying the same person, for example, an existing tracking algorithm such as tracking learning detection (TLD) or kernelized correlation filters (KCF) can be used. The information processing apparatus 100 generates a tracklet by connecting positional information calculated from each frame of the same person. An ID is assigned to the tracklet, and information of the BBOX cut out from each frame is associated with the tracklet.

For example, the information processing apparatus 100 generates a tracklet 13-1 of the person 10b on the basis of the result of the person detection processing for the frame captured by the camera 31-1. The information processing apparatus 100 generates a tracklet 13-2 of the person 10b on the basis of the result of the person detection processing for the frame captured by the camera 31-2. The information processing apparatus 100 generates a tracklet 13-3 of the person 10a on the basis of the result of the person detection processing for the frame captured by the camera 31-3. The information processing apparatus 100 generates a tracklet 13-4 of the person 10a on the basis of the result of the person detection processing for the frame captured by the camera 31-4.

The inter-camera tracking processing by the information processing apparatus 100 will be described. The information processing apparatus 100 executes multilayer camera calibration regarding the head, the waist, the foot, and the like of a person. The information processing apparatus 100 estimates a position of each tracklet generated in the intra-camera tracking processing on the floor using an execution result of the camera calibration. The information processing apparatus 100 extracts the ReID feature amount from each tracklet generated in the intra-camera tracking processing.

For example, in a case of extracting the ReID feature amount of one tracklet, the information processing apparatus 100 extracts the ReID feature amount of the tracklet by inputting the BBOX of the frame associated with the tracklet to a training model such as the NN. In a case where tracklets of a plurality of frames are integrated to generate a tracklet, the tracklet has the ReID feature amount of the tracklet of each frame.

The information processing apparatus 100 executes multi-level density based spatial clustering of applications with noise (DBSCAN) on the basis of the ReID feature amount extracted from each tracklet. The information processing apparatus 100 integrates the tracklets classified into the same cluster. For example, in the example illustrated in FIG. 3A, a tracklet 14 in which the tracklet 13-3 and the tracklet 13-4 are integrated is generated. Note that the tracklets 13-1 and 13-2 remain unintegrated.

In a case where the tracklet includes the tracklet for each frame, the information processing apparatus 100 may calculate a representative value of the ReID feature amount of each tracklet and use the representative value as the ReID feature amount of the tracklet.

The preprocessing (person detection processing, intra-camera tracking processing, and inter-camera tracking processing) executed by the information processing apparatus 100 has been described above. An ID for identifying each tracklet is set to the tracklet generated by the preprocessing. In addition, information of the BBOX cut out from each frame is associated with the tracklet.

Next, global optimization processing executed by the information processing apparatus 100 will be described. For example, the information processing apparatus 100 executes, as the global optimization processing, ID transfer error removal processing (ID-transfer error removal), optimized hierarchical clustering processing (Optimized Hierarchical Clustering), pose-oriented grouping processing (Pose-oriented cluster-level grouping), and error suppression processing (Error suppression and Refinements).

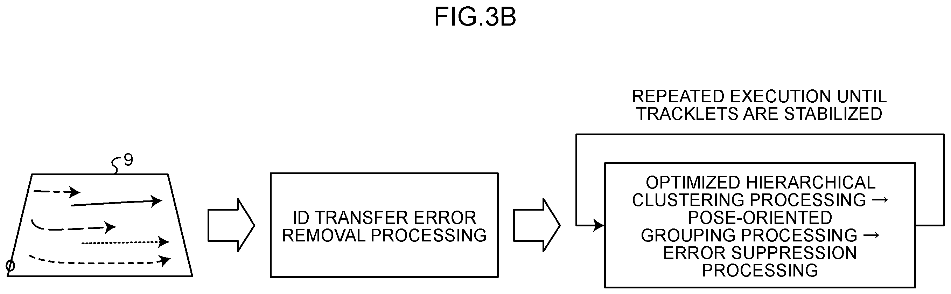

FIG. 3B is a diagram illustrating an example of global optimization processing. The information processing apparatus 100 executes the ID transfer error removal processing on a plurality of tracklets 9 generated by the preprocessing. After executing the ID transfer error removal processing, the information processing apparatus 100 executes the optimized hierarchical clustering processing, the pose-oriented grouping processing, and the error suppression processing. The information processing apparatus 100 repeatedly executes the optimized hierarchical clustering processing, the pose-oriented grouping processing, and the error suppression processing until the tracklets are stabilized (until the number of tracklets is no longer changed).

The ID transfer error removal processing, the optimized hierarchical clustering processing, the pose-oriented grouping processing, and the error suppression processing illustrated in FIG. 3B will be sequentially described.

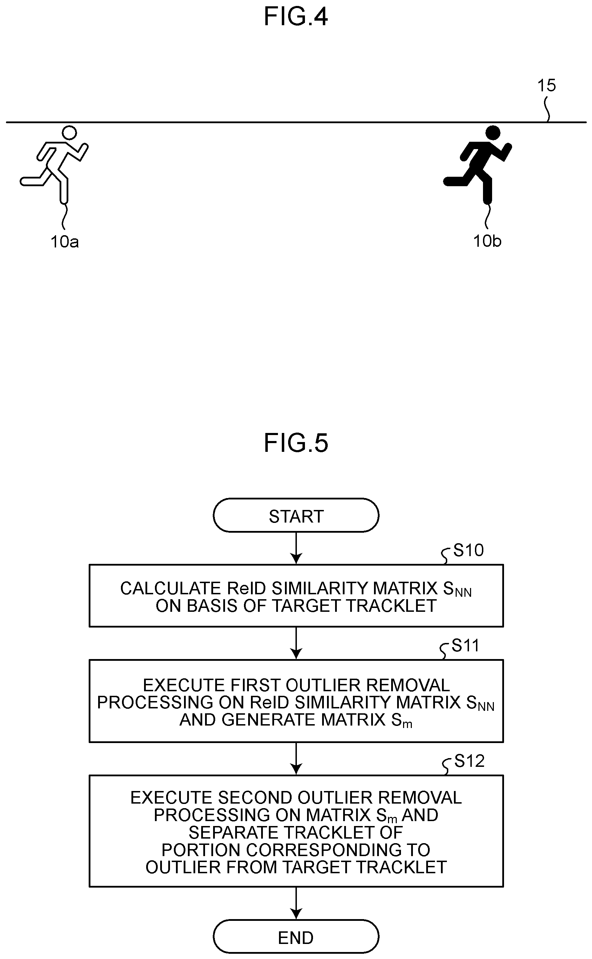

First, an example of the ID transfer error removal processing executed by the information processing apparatus 100 will be described. FIG. 4 is a diagram for describing ID transfer. The ID transfer means that tracklets of a plurality of persons are erroneously integrated into one tracklet. For example, in the example illustrated in FIG. 4, a tracklet 15 in which the tracklet of the person 10a and the tracklet of the person 10b are integrated is generated. For example, one ID "ID=1" is set in the tracklet 15.

In a case where the ID transfer error removal processing is performed, the information processing apparatus 100 executes removal of the ID transfer error based on the Z-score in two stages. FIG. 5 is a flowchart illustrating a processing procedure of the ID transfer error removal processing. As illustrated in FIG. 5, the information processing apparatus 100 calculates a ReID similarity matrix $S_{NN}$ on the basis of the tracklet (Step S10).

The information processing apparatus 100 generates a matrix $S_m$ by executing first outlier removal processing on the ReID similarity matrix $S_{NN}$ (Step S11). The information processing apparatus 100 executes second outlier removal processing, and separates the tracklet of the portion corresponding to the outlier from the target tracklet (Step S12).

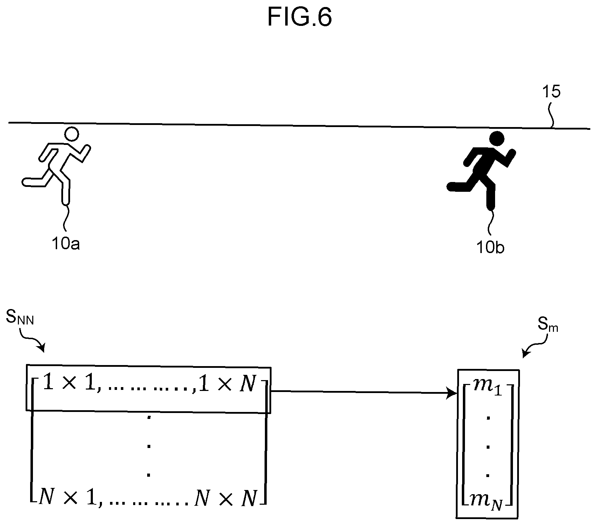

FIG. 6 is a diagram for describing the first outlier removal processing and the second outlier removal processing. For example, the tracklet 15 is a tracklet in which tracklets from the first frame to the N-th frame are integrated.

The information in the first row of the ReID similarity matrix $S_{NN}$ is information regarding the first frame of the tracklet 15. An element in the first row and the first column of the ReID similarity matrix $S_{NN}$ is a similarity degree between the ReID feature amount of the first frame of the tracklet 15 and the ReID feature amount of the first frame of the tracklet 15. The similarity degree is cosine similarity degree or the like. An element in the first row and the second column of the ReID similarity matrix $S_{NN}$ is a similarity degree between the ReID feature amount of the first frame of the tracklet 15 and the ReID feature amount of the second frame of the tracklet 15. An element in the first row and the N-th column of the ReID similarity matrix $S_{NN}$ is a similarity degree between the ReID feature amount of the first frame of the tracklet 15 and the ReID feature amount of the N-th frame of the tracklet 15.

The information in the second row of the ReID similarity matrix $S_{NN}$ is information regarding the second frame of the tracklet 15. Similarly to the information regarding the first frame, the information regarding the second frame is a similarity degree of the ReID feature amounts of other frames. The information in the N-th row of the ReID similarity matrix $S_{NN}$ is information regarding the N-th frame of the tracklet 15. Similarly to the information regarding the first frame, the information regarding the second frame is a similarity degree of the ReID feature amounts of other frames.

Here, the first outlier removal processing will be described using the information in the first row of the ReID similarity matrix $S_{NN}$. The information processing apparatus 100 calculates an average value $\mu$ and a standard deviation $\sigma$

of each element of the first row of the ReID similarity matrix $S_{NN}$. The information processing apparatus 100 calculates the Z-score on the basis of Expression (1).

$$Z = \frac{x - \mu}{\sigma} \qquad \cdots (1)$$

In Expression (1), x is a data point and corresponds to, for example, a ReID feature amount of one element of the ReID similarity matrix $S_{NN}$. The information processing apparatus specifies an element of which the value of the Z-score is "-2 or less" or "2 or more" as an outlier.

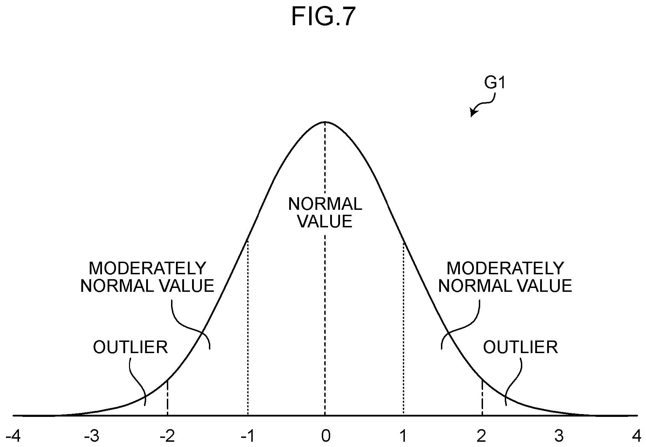

FIG. 7 is a diagram for describing a relationship between Z-scores and outliers. The horizontal axis of a graph G1 is an axis corresponding to Z-scores. For example, in a case where the Z-score is included in a range of "-1 or more and 1 or less", the corresponding data point (ReID feature amount of the corresponding element) is a normal value. In a case where the Z-score is "greater than -2 and less than -1" or "greater than 1 and less than 2", the corresponding data point is a moderately normal value. On the other hand, in a case where the Z-score is "-2 or less" or "2 or more", the corresponding data point is an outlier.

As illustrated in FIG. 7, outliers indicate information that extremely fluctuates in the data set, and become factors that cause erroneous determination of analysis.

The information processing apparatus 100 excludes an element corresponding to an outlier from each element in the first row of the ReID similarity matrix $S_{NN}$. In addition, after excluding the outlier, the information processing apparatus 100 sets the average value of the elements in the first row of the ReID similarity matrix $S_{NN}$ as an element $m_1$ in the first row of the matrix $S_m$.

The information processing apparatus 100 repeatedly executes the above-described processing also on the information in the second to N-th rows of the ReID similarity matrix $S_{NN}$ to set the mean values as elements $m_2$ to $m_N$ in the first row of the matrix $S_m$.

Next, the second outlier removal processing will be described using the matrix $S_m$. The information processing apparatus 100 calculates the average value $\mu$ and the standard deviation $\sigma$ on the basis of the elements $m_1$ to $m_N$ of the matrix $S_m$. The information processing apparatus 100 calculates the Z-score of each of the elements $m_1$ to $m_N$ on the basis of Expression (1). The information processing apparatus 100 specifies an element of which the Z-score is "-2 or less" or "2 or more" as an outlier, among the elements $m_1$ to $m_N$.

The information processing apparatus 100 performs processing of separating the tracklet corresponding to the element specified as the outlier, from the tracklet 15. For example, in a case where the element $m_3$ among the elements $m_1$ to $m_N$ is an outlier, the information processing apparatus 100 separates the tracklet corresponding to the third frame from the tracklet 15.

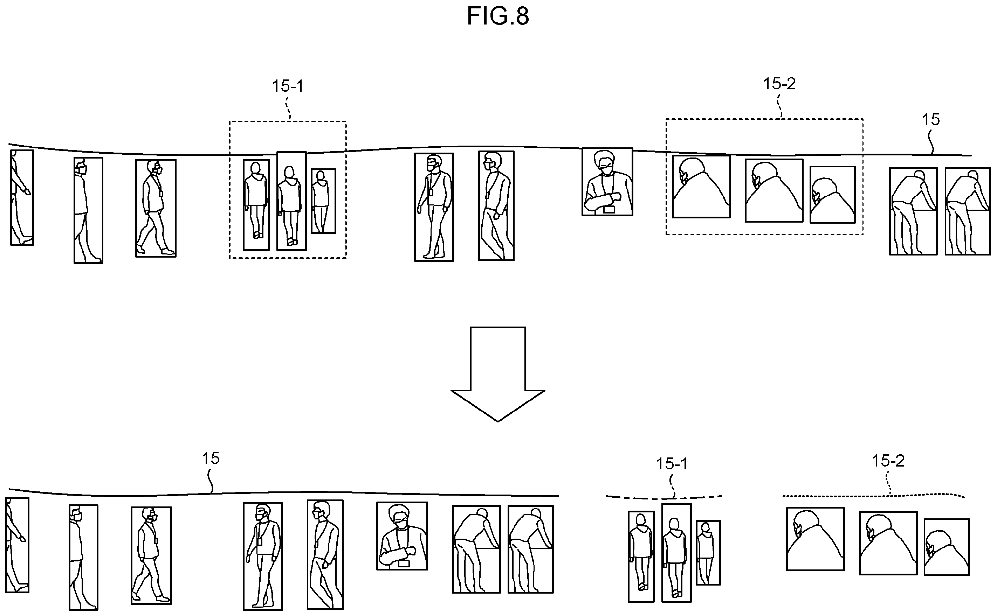

FIG. 8 is a diagram illustrating a processing result of the ID transfer error removal processing. The tracklet 15 illustrated in FIG. 8 is the tracklet before the ID transfer error removal processing is executed. The information processing apparatus 100 executes the above-described processing on the tracklet 15 to specify tracklets 15-1 and 15-2 that are outliers.

The information processing apparatus 100 separates the tracklets 15-1 and 15-2 from the tracklet 15. The information processing apparatus 100 assigns a new ID to the tracklets 15-1 and 15-2.

The ID transfer error removal processing executed by the information processing apparatus 100 has been described above.

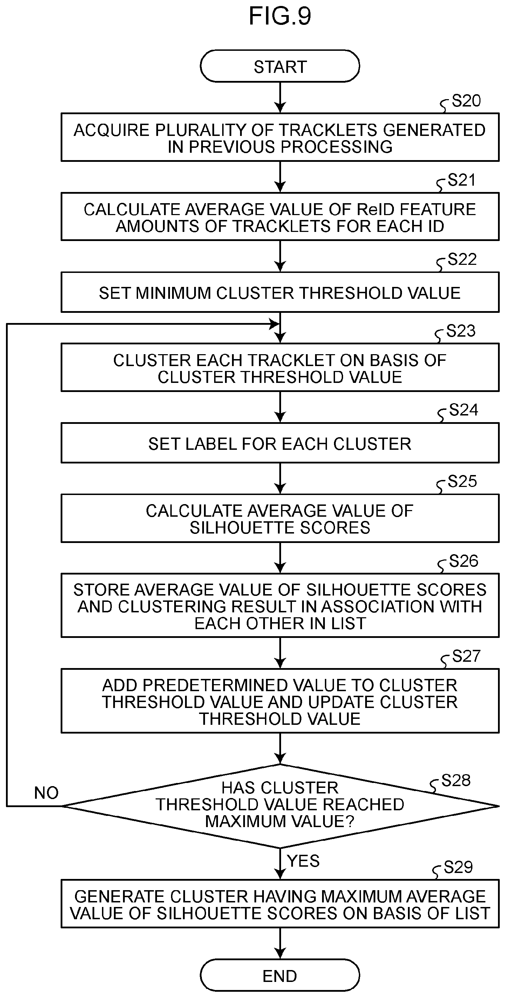

Next, an example of the optimized hierarchical clustering processing executed by the information processing apparatus 100 will be described. FIG. 9 is a flowchart illustrating a processing procedure of the optimized hierarchical clustering processing. As illustrated in FIG. 9, the information processing apparatus 100 acquires a plurality of tracklets generated in the previous processing (ID transfer error removal processing) (Step S20).

The information processing apparatus 100 calculates an average value of the ReID feature amounts of the tracklet for each ID (Step S21). For example, in Step S21, a tracklet with a certain ID is obtained by integrating tracklets of respective frames, and an average value of the ReID feature amounts of the tracklet of each frame is calculated as an average value of the ReID feature amounts of the tracklet with the certain ID. Here, the description will be given using the average value of the ReID feature amounts, but a representative value such as a median value may be used instead of the average value.

The information processing apparatus 100 sets a minimum cluster threshold value (Step S22). The information processing apparatus 100 clusters each tracklet on the basis of the cluster threshold value (Step S23). For example, in Step S22, in a case where the similarity degree between the average value of the ReID feature amounts of the tracklets with the ID "1" and the average value of the ReID feature amounts of the tracklets with the ID "2" is equal to or greater than the cluster threshold value, the information processing apparatus 100 classifies the tracklet with the ID "1" and the tracklet with the ID "2" into the same cluster.

The information processing apparatus 100 sets a label for each cluster (Step S24). The information processing apparatus 100 calculates an average value of silhouette scores (Step S25). The information processing apparatus 100 stores the average value of the silhouette scores and a clustering result in association with each other (Step S26).

The information processing apparatus 100 adds a predetermined value to the clustering threshold value, and updates the clustering threshold value (Step S27). In a case where the cluster threshold value has not reached the maximum value (Step S28, No), the information processing apparatus 100 proceeds to Step S23.

On the other hand, in a case where the cluster threshold value has reached the maximum value (Step S28, Yes), the information processing apparatus 100 generates a cluster having the maximum average value of the silhouette scores on the basis of a list (Step S29).

Here, an example of the silhouette score calculated by the information processing apparatus 100 will be described. A clustering result with a higher silhouette score indicates a better clustering result than a clustering result with a lower silhouette score. For example, the silhouette score can be considered a value that represents the quality of a cluster.

For example, the information processing apparatus 100 calculates an average value $s_{avg,K}$ of the silhouette score on the basis of Expression (2).

$$s_{avg,k} = \frac{1}{n} \sum s_i \qquad \cdots (2)$$

$s_i$ included in Expression (2) is a score of a data point i and is indicated by Expression (3). The data point regarding the calculation of the silhouette score indicates a tracklet.

$$s_i = \frac{b_i - a_i}{\max(b_i, a_i)} \qquad \cdots (3)$$

$b_i$ included in Expression (3) is a value indicating how far the distance from another cluster $C_k$ closest to the cluster to which the data point i (tracklet) belongs is, and is indicated by Expression (4). The larger the value of $b_i$, the farther the cluster to which the data point i (tracklet) belongs is from the other cluster $C_k$.

$$b_i = \min_{k \neq i} \frac{1}{|C_k|} \sum_{j \in C_k} d(i, j) \qquad \cdots (4)$$

$d(i,j)$ in Expression (4) represents a distance between the data point i and the tracklet j included in the other cluster $C_k$. i is fixed, and j indicates each tracklet included in the other cluster $C_k$ being sequentially selected.

$a_i$ included in Expression (3) is a value indicating how dense the tracklets are in the cluster $C_i$ to which the data point i (tracklet) belongs, and is indicated by Expression (5). The larger the value of $a_i$, the more densely the tracklets of the cluster cluster $C_i$ are.

$$a_i = \frac{1}{|C_i| - 1} \sum_{j \in C_i, i \neq j} d(i, j) \qquad \cdots (5)$$

$d(i,j)$ in Expression (5) represents a distance between the data point i and another tracklet j in the cluster cluster $C_i$ to which the data point i belongs. i is fixed, and j indicates each tracklet included in $C_i$ being sequentially selected.

The information processing apparatus 100 calculates the average value $s_{avg,K}$ of the silhouette scores for all the clusters K on the basis of Expression (2). For example, the information processing apparatus 100 may further calculate the average value of the average values $s_{avg,K}$ of the silhouette scores for each cluster to calculate the silhouette scores for the cluster result.

The optimized hierarchical clustering processing executed by the information processing apparatus 100 has been described above.

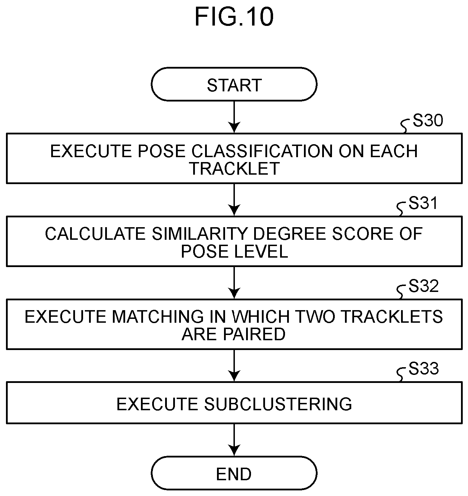

Next, an example of the pose-oriented grouping processing executed by the information processing apparatus 100 will be described. FIG. 10 is a flowchart illustrating a processing procedure of the pose-oriented grouping processing. As illustrated in FIG. 10, the information processing apparatus 100 executes pose classification for each tracklet (Step S30).

The information processing apparatus 100 calculates a similarity degree score of a pose level (Step S31). The information processing apparatus 100 executes matching in which two tracklets are paired (Step S32). The information processing apparatus 100 executes subclustering (Step S33).

Here, the pose classification described in step S30 of FIG. 10 will be described more specifically. For example, among a plurality of clusters obtained as a result of the above-described optimized hierarchical clustering processing, a certain cluster includes a plurality of tracklets. In addition, each tracklet is obtained by integrating a plurality of tracklets for each frame, and an image of a person cut out by a bounding box or the like is associated with each tracklet. For example, an image of a person is associated with one tracklet. In the following description, an image of a person associated with the tracklet is referred to as a "person image".

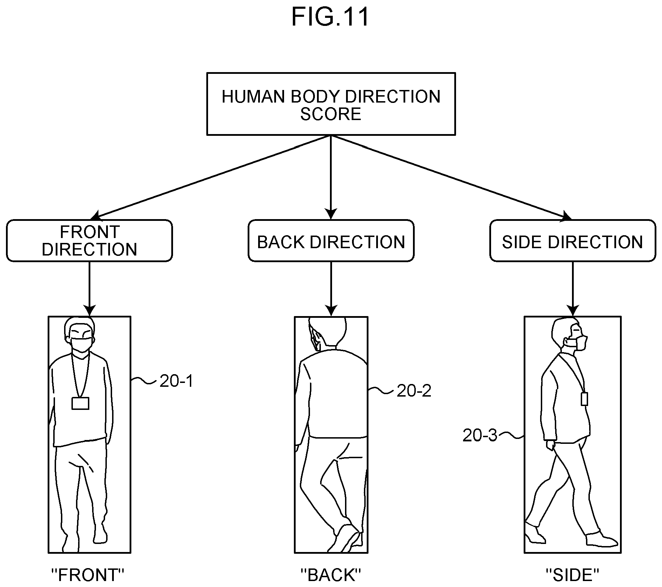

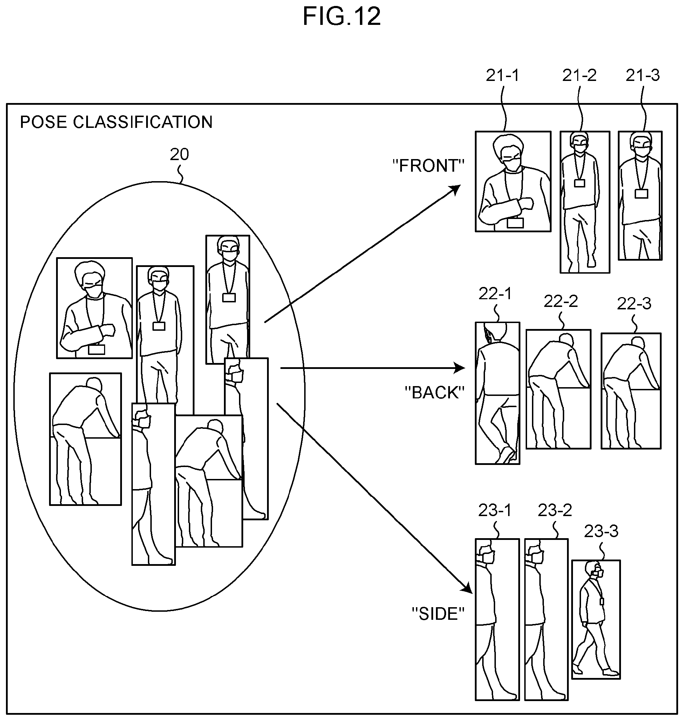

FIGS. 11 and 12 are diagrams for describing pose classification. First, FIG. 11 will be described. The information processing apparatus 100 calculates a "human body direction score" for each person image, and specifies which one of a "front direction", a "back direction", and a "side direction" the person image is in, on the basis of the human body direction score.

In a case where a person image 20-1 is in the front direction, the information processing apparatus 100 assigns a label "FRONT" to the person image 20-1. In a case where a person image 20-2 is in the back direction, the information processing apparatus 100 assigns a label "BACK" to the person image 20-2. In a case where a person image 20-3 is in the side direction, the information processing apparatus 100 assigns a label "SIDE" to the person image 20-3.

The description of FIG. 12 will be made. The information processing apparatus 100 executes the processing described in FIG. 11 to assign any of the labels "FRONT", "BACK", and "SIDE" to other person images, and classifies the person images to which the same label is assigned.

Tracklets for each frame are integrated into a certain tracklet, and a person image is associated with each tracklet for each frame. That is, a plurality of person images is associated with one tracklet. In the example illustrated in FIG. 12, a plurality of person images for one tracklet is illustrated as a person image group 20.

The information processing apparatus 100 calculates a person score for each person image of the person image group 20, and assigns the label "FRONT" to person images 21-1, 21-2, and 21-3. The information processing apparatus 100 assigns the label "BACK" to person images 22-1, 22-2, and 22-3. The information processing apparatus 100 assigns the label "SIDE" to person images 23-1, 23-2, and 23-3.

Note that the information processing apparatus 100 may calculate the human body direction score in any manner. For example, the information processing apparatus 100 inputs a person image to a trained NN or the like, and estimates the pose of the person. The information processing apparatus compares a pose template in the front direction, a pose template in the back direction, and a pose template in the side direction with the estimated pose, and calculates each of a score of the front-direction likeness, a score of the back-direction likeness, and a score of the side-direction likeness as the human body direction score. In a case where the score of the front-direction likeness is larger than other scores, the information processing apparatus 100 determines that the person image is in the front direction.

The pose classification executed by the information processing apparatus 100 has been described above.

Next, calculation of the similarity degree score of the pose level, matching in which two tracklets are paired, and subclustering described in Steps S31, S32, and S33 in FIG. 10 will be described more specifically.

First, the similarity degree score between frames (two tracklets as comparison targets) includes a first score ($S_{score1}$), a second score ($S_{score2}$), and a third score ($S_{score3}$). The information processing apparatus 100 calculates the first score on the basis of Expression (6). $S_{nm}$ included in Expression (6) is a matrix (n rows and m columns) indicating the similarity degree of the ReID feature amounts between frames.

$$S_{score1} = mean(S_{nm}) \qquad \cdots (6)$$

The information processing apparatus 100 calculates the second score on the basis of Expression (7). $S_{max}$ included in Expression (7) is defined as in Expression (8).

$$S_{score2} = mean(S_{max}) \qquad \cdots (7)$$

$$S_{max} = max_n |S_{nm}| \qquad \cdots (8)$$

The information processing apparatus 100 calculates the third score on the basis of Expression (9). "$S_i > th$" in Expression (9) is the number of elements having a value larger than a threshold value th set in advance, among the elements of $S_{nm}$.

$$S_{score3} = \sum_{i}^{n \times m} [S_i > th] / n \times m \qquad \cdots (9)$$

Here, the information processing apparatus 100 selects two tracklets to be calculation targets of the similarity degree score, from all the tracklets included in the same cluster. For example, one tracklet is "$Trj_p$", and the other tracklet is "$Trj_{qp}$". The information processing apparatus 100 assigns a certain tracklet "$Trj_1$" to a subcluster ($SubC_1$) in advance.

For example, $Trj_p$ is a tracklet in which tracklets for each frame are integrated, and the person image of the tracklet for each frame is classified (assigned a label) into any of "FRONT", "BACK", and "SIDE" according to the pose classification described above. In the following description, a pose classification result of the person image of the tracklet is also applied to the tracklet. For example, when a classification result of the person image of a certain tracklet is "FRONT", the classification result of the certain tracklet is "FRONT". The same applies to $Trj_{qp}$.

The information processing apparatus 100 calculates each of a first score (FRONT), a second score (FRONT), and a third score (FRONT) between frames of a tracklet "$Trj_{p,FRONT}$" of "FRONT" among the tracklets for each frame included in $Trj_p$ and a tracklet "$Trj_{qp,FRONT}$" of "FRONT" among the tracklets for each frame included in $Trj_{qp}$.

The information processing apparatus 100 calculates each of a first score (BACK), a second score (BACK), and a third score (BACK) between frames of a tracklet "$Trj_{p,BACK}$" of "BACK" among the tracklets for each frame included in $Trj_p$ and a tracklet "$Trj_{qp,BACK}$" of "BACK" among the tracklets for each frame included in $Trj_{qp}$.

The information processing apparatus 100 calculates a first score (SIDE), a second score (SIDE), and a third score (SIDE) between frames of a tracklet "$Trj_{p,SIDE}$" of "SIDE" among the tracklets for each frame included in $Trj_p$ and a tracklet "$Trj_{qp,SIDE}$" of "SIDE" among the tracklets for each frame included in $Trj_{qp}$.

The information processing apparatus 100 calculates an average value (first score average value) of the first score (FRONT), the first score (BACK), and the first score (SIDE). The information processing apparatus 100 calculates an average value (second score average value) of the second score (FRONT), the second score (BACK), and the second score (SIDE). The information processing apparatus 100 calculates an average value (third score average value) of the third score (FRONT), the third score (BACK), and the third score (SIDE).

In a case where the first score average value is equal to or greater than a threshold value $Th_1$, the second score average value is equal to or greater than a threshold value $Th_2$, and the third score average value is equal to or greater than a threshold value $Th_3$, the information processing apparatus 100 calculates the score of $Trj_{p,SubCq}$ on the basis of Expression (10).

$$Trj_{p,SubC_q} = \sum_{pq=1, p \neq pq}^{Y} \frac{Score_h(Trj_p, Trj_{qp})}{n-1} \qquad \cdots (10)$$

The information processing apparatus 100 repeatedly executes the above-described processing while changing the value of q of $Trj_{pq}$ from 1 to Y (q=1 to Y), thereby calculating $Trj_{p,SubCq}$ for each q. The information processing apparatus 100 specifies a subcluster of $Trj_{pq}$ on the basis of the maximum value of $Trj_{p,SubCq}$ (q=1 to Y). For example, in a case where $Trj_{p,SubC2}$ is maximized, the information processing apparatus assigns $Trj_p$ to a subcluster ($SubC_2$).

On the other hand, in a case where the condition that the first score average value is equal to or greater than a threshold value $Th_1$, the second score average value is equal to or greater than a threshold value $Th_2$, and the third score average value is equal to or greater than a threshold value $Th_3$ is not satisfied, the information processing apparatus 100 generates a new subcluster, and increments the above-described "Y".

The information processing apparatus 100 repeatedly executes the above-described processing while changing the value of p of $Trj_p$ from 2 to X (p=2 to X), thereby classifying all the tracklets included in the same cluster into any subcluster.

The information processing apparatus 100 repeatedly executes the above-described processing for other clusters. Thus, the tracklets classified into one cluster are classified into a plurality of subclusters.

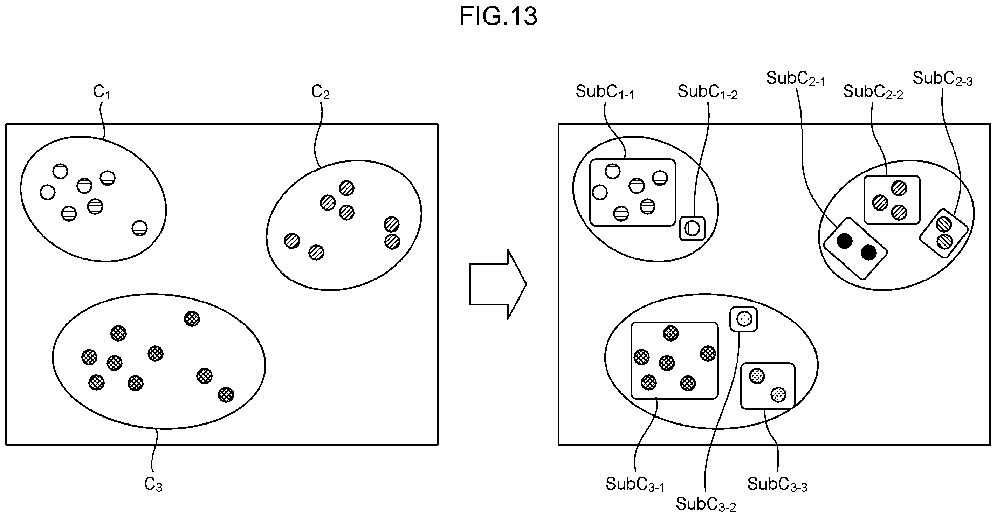

FIG. 13 is a diagram for describing subclustering. Each circle mark illustrated in FIG. 13 indicates a tracklet. For example, it is assumed that each tracklet is classified into clusters $C_1$, $C_2$, and $C_3$ by the optimized hierarchical clustering processing. The clusters $C_1$, $C_2$, and $C_3$ correspond to "representative clusters".

The information processing apparatus 100 executes the above-described processing to separate each tracklet of the cluster $C_1$ into subclusters $SubC_{1-1}$ and $SubC_{1-2}$. Each tracklet of the cluster $C_2$ is separated into subclusters $SubC_{2-1}$, $SubC_{2-2}$, and $SubC_{2-3}$. Each tracklet of the cluster $C_3$ is separated into subclusters $SubC_{3-1}$, $SubC_{3-2}$, and $SubC_{3-3}$.

The pose-oriented grouping processing executed by the information processing apparatus 100 has been described above.

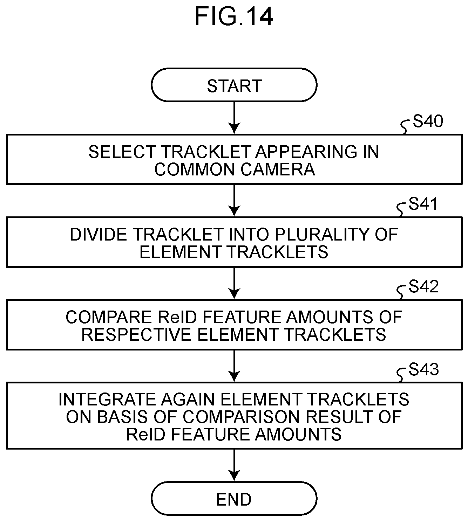

Next, error suppression processing executed by the information processing apparatus 100 will be described. FIG. 14 is a flowchart illustrating a processing procedure of the error suppression processing. As illustrated in FIG. 14, as illustrated in FIG. 14, the information processing apparatus 100 selects a plurality of tracklets appearing in a common camera (Step S40).

The information processing apparatus 100 divides the selected tracklet into a plurality of element tracklets (Step S41). The information processing apparatus 100 compares the ReID feature amounts of the element tracklets on the basis of the common camera region (Step S42). The information processing apparatus 100 reintegrates the element tracklets on the basis of the comparison result of the ReID feature amounts (Step S43).

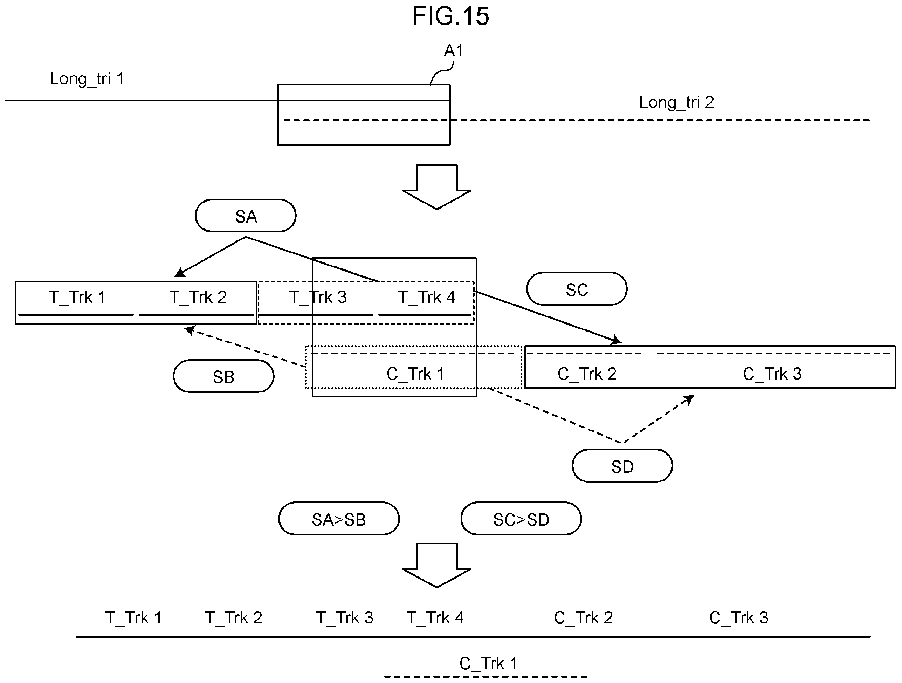

FIG. 15 is a diagram for describing the error suppression processing. In the example illustrated in FIG. 15, the description will be made using a tracklet (Long_tri1) and a tracklet (Long_tri2). In addition, for the tracklet (Long_tri1) and the tracklet (Long_tri2), a region A1 is set as a region imaged by the common camera 31.

The information processing apparatus 100 divides the tracklet in the region A1 of the tracklet (Long_tri1) into element tracklets T_Trk1, T_Trk2, T_Trk3, and T_Trk4. The information processing apparatus 100 divides the tracklet in the region A1 of the tracklet (Long_tri2) into element tracklets C_Trk1, C_Trk2, and C_Trk3. For example, the information processing apparatus 100 uses the above-described ID transfer error removal processing to divide the tracklet into a plurality of element tracklets.

In FIG. 15, a region A2 is a time-overlapping region. The element tracklets included in the region A2 are the element tracklets T_Trk3 and T_Trk4 and the element tracklet C_Trk1. The information processing apparatus 100 compares the ReID feature amounts of the element tracklets T_Trk3 and T_Trk4 with the ReID feature amounts of the element tracklets T_Trk1 and T_Trk2, and calculates a similarity degree (similarity degree SA). The information processing apparatus 100 compares the ReID feature amount of the element tracklets C_Trk1 with the ReID feature amounts of the element tracklets T_Trk1 and T_Trk2, and calculates a similarity degree (similarity degree SB).

The information processing apparatus 100 determines the one having the larger similarity degree as an integration destination of the element tracklets T_Trk1 and T_Trk2. For example, when the similarity degree SA > the similarity degree SB, the information processing apparatus 100 determines the integration destination of the element tracklets T_Trk1 and T_Trk2 as the element tracklets T_Trk3 and T_Trk4.

In addition, the information processing apparatus 100 compares the ReID feature amounts of the element tracklets T_Trk3 and T_Trk4 with the ReID feature amounts of the element tracklets C_Trk2 and C_Trk3, and calculates a similarity degree (similarity degree SC). The information processing apparatus 100 compares the ReID feature amount of the element tracklets C_Trk1 with the ReID feature amounts of the element tracklets C_Trk2 and C_Trk3, and calculates a similarity degree (similarity degree SD).

The information processing apparatus 100 determines the one having the larger similarity degree as an integration destination of the element tracklets C_Trk2 and C_Trk3. For example, when similarity degree SC > similarity degree SD, the information processing apparatus 100 determines the integration destination of the element tracklets C_Trk2 and C_Trk3 as the element tracklets T_Trk3 and T_Trk4.

The information processing apparatus 100 integrates the element tracklets C_Trk2 and C_Trk3 into the element tracklets T_Trk3 and T_Trk4 on the basis of the above-described determination result. As a result, element tracklets T_Trk1, T_Trk2, T_Trk3, T_Trk4, C_Trk2, and C_Trk3 are generated as a new tracklet.

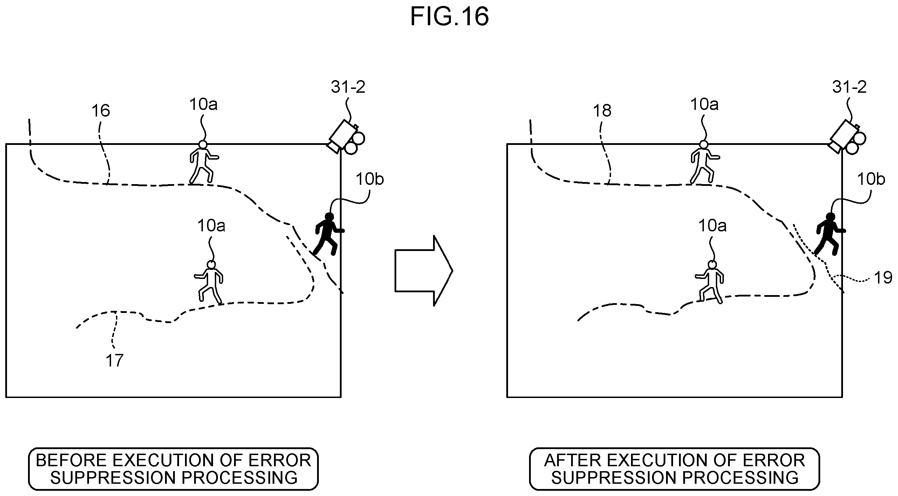

FIG. 16 is a diagram illustrating tracklets before and after execution of the error suppression processing. For example, before the execution of the error suppression processing, tracklets 16 and 17 are generated by the intra-camera tracking. Note that the tracklet of the person 10a and the tracklet of the person 10b are integrated in the tracklet 16. In addition, the tracklet 17 is the tracklet of the person 10a, and the tracklet 17 is separated from the tracklet 16.

On the other hand, after the execution of the error suppression processing, a tracklet 18 of the person 10a and a tracklet 19 of the person 10b are accurately generated.

The error suppression processing executed by the information processing apparatus 100 has been described above.

As described above, the information processing apparatus 100 executes the ID transfer error removal processing on the plurality of tracklets generated by the preprocessing. After executing the ID transfer error removal processing, the information processing apparatus 100 executes the optimized hierarchical clustering processing, the pose-oriented grouping processing, and the error suppression processing. The information processing apparatus 100 repeatedly executes the optimized hierarchical clustering processing, the pose-oriented grouping processing, and the error suppression processing until the tracklets are stabilized. As a result, it is possible to accurately generate trajectory information.

As described in the optimized hierarchical clustering processing, the information processing apparatus 100 calculates the silhouette score while changing the cluster threshold value, and generates a plurality of clusters (representative clusters) having the maximum average value of the silhouette scores. Thereby, an optimal cluster can be generated without adjusting a unique threshold value for each data set.

As described in the error suppression processing, the information processing apparatus 100 selects a plurality of tracklets appearing in the common camera, divides the tracklet in the time-overlapping region into a plurality of tracklets with respect to the selected tracklet, and recombines the tracklets using the similarity degree of the ReID feature amount of each tracklet. As a result, it is possible to solve the problem in the related art that tracklets that appear in the same camera and overlap in time remain connected.

As described in the ID transfer error removal processing, the information processing apparatus 100 performs processing of dividing the target tracklet into a plurality of tracklets, specifying an outlier of the feature amount of each tracklet, and separating the tracklet corresponding to the specified outlier from the original tracklet. As a result, it is possible to resolve the ID transfer error that can be generated in the preprocessing.

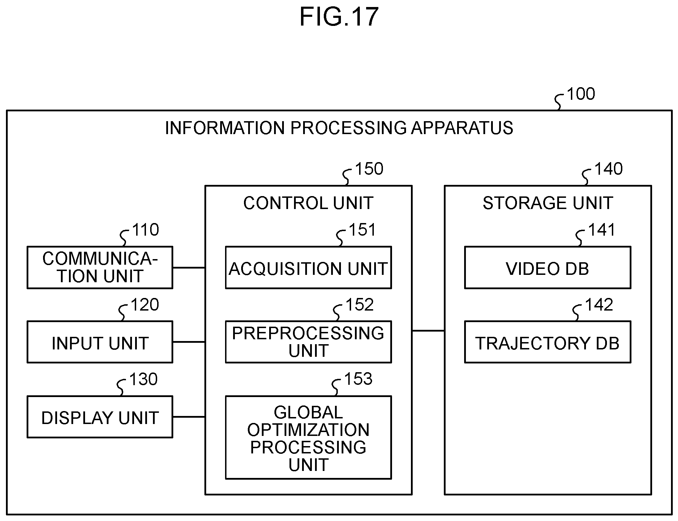

Next, a configuration example of the information processing apparatus 100 described above will be described. FIG. 17 is a functional block diagram illustrating a configuration of the information processing apparatus according to the present embodiment. As illustrated in FIG. 17, the information processing apparatus 100 includes a communication unit 110, an input unit 120, a display unit 130, a storage unit 140, and a control unit 150.

The communication unit 110 executes data communication with the camera 31, an external device, or the like via a network.

The input unit 120 inputs various kinds of information to the control unit 150.

The display unit 130 displays the information output from the control unit 150.

The storage unit 140 includes a video DB 141 and a trajectory DB 142. The storage unit 140 is a memory or the like.

The video DB 141 stores data of time-series frames imaged by the camera 31. The video DB 141 can store positional information such as a BBOX of a person and coordinates for specifying a person in association with each frame.

The trajectory DB 142 stores various kinds of information regarding the tracklet. For example, in the trajectory DB 142, in a case where an ID for identifying a tracklet is assigned to the tracklet and the tracklet is obtained by integrating a plurality of tracklets, information (positional information, ReID feature amount) of the tracklet for each frame, information of the BBOX cut out from each frame, and the like are associated with the tracklet.

The control unit 150 includes an acquisition unit 151, a preprocessing unit 152, and a global optimization processing unit 153. The control unit 150 is a central processing unit (CPU), a graphics processing unit (GPU), or the like.

The acquisition unit 151 acquires video data (time-series frames) from the camera 31. The acquisition unit 151 stores the acquired video data in the video DB 141.

The preprocessing unit 152 acquires time-series frames from the video DB 141 and executes preprocessing. The preprocessing unit 152 sequentially executes, as the preprocessing, the person detection processing, the intra-camera tracking processing, and the inter-camera tracking processing, and registers information of the generated tracklet in the trajectory DB 142.

For example, the preprocessing unit 152 analyzes time-series frames imaged by the camera 31, and generates a fragmentary tracklet of a person included in each frame on the basis of an analysis result. In addition, the preprocessing unit 152 calculates a feature amount (ReID feature amount) regarding the appearance of a person by inputting the information of the fragmentary tracklet to the NN or the like.

Other descriptions regarding the person detection processing, the intra-camera tracking processing, and the inter-camera tracking processing executed by the preprocessing unit 152 are similar to the contents described in FIG. 3A and the like.

The global optimization processing unit 153 executes the global optimization processing on the basis of the execution result of the preprocessing unit 152 to generate trajectory information in which fragmentary tracklets of the same person are connected. The global optimization processing unit 153 executes, as the global optimization processing, the ID transfer error removal processing, the optimized hierarchical clustering processing, the pose-oriented grouping processing, and the error suppression processing. The global optimization processing unit 153 repeatedly executes the optimized hierarchical clustering processing, the pose-oriented grouping processing, and the error suppression processing until the number of tracklets is no longer changed. Note that the global optimization processing unit 153 may repeatedly execute the above-described processing a preset number of times. The global optimization processing unit 153 may register a tracklet that is a final processing result in the trajectory DB 142 or may output the tracklet to an external device.

For example, the global optimization processing unit 153 generates a plurality of representative clusters by clustering a plurality of specified fragmentary trajectories using the similarity of the representative values of the feature amounts (ReID feature amounts) of a plurality of frames. The global optimization processing unit 153 generates a plurality of subclusters obtained by clustering each of a plurality of clustered trajectories in each of the generated representative clusters using the representative values of a plurality of poses of a person. The global optimization processing unit 153 sets a plurality of trajectories corresponding to the subcluster as fragmentary trajectories of the same person on the basis of the result of the plurality of generated subclusters.

Other descriptions regarding the ID transfer error removal processing, the optimized hierarchical clustering processing, the pose-oriented grouping processing, and the error suppression processing executed by the global optimization processing unit 153 are similar to the contents described in FIG. 3B and the like.

In addition, the information processing apparatus 100 generates a movement trajectory of a person from an entrance of a facility to an exit of the facility using the set fragmentary trajectory of the same person, and displays the generated movement trajectory of the person on a display device. For example, the information processing apparatus 100 specifies an entrance and an exit through which a person passes among a plurality of entrances and exits in the store, and draws a trajectory of the person in a passage region from the specified entrance to the specified exit on a floor map. More specifically, for example, the information processing apparatus 100 specifies the entrance and the exit by tracking the movement trajectory of the person in the store. Then, the information processing apparatus 100 generates a movement trajectory of a person by connecting each of the plurality of fragmentary trajectories.

Note that the expressions "entrance" in a facility and "exit" in a facility include a region set for access to each floor in a facility with a single floor or a plurality of floors. For example, the information processing apparatus 100 maps a movement trajectory of a person on a two-dimensional floor map by executing the above-described processing on a time-series camera images in which a certain person is imaged. For example, the information processing apparatus 100 specifies that the person passes through the entrance of the facility, looks at several shelves, then makes a payment at the register, and passes through the exit of the facility, on the basis of the movement trajectory.

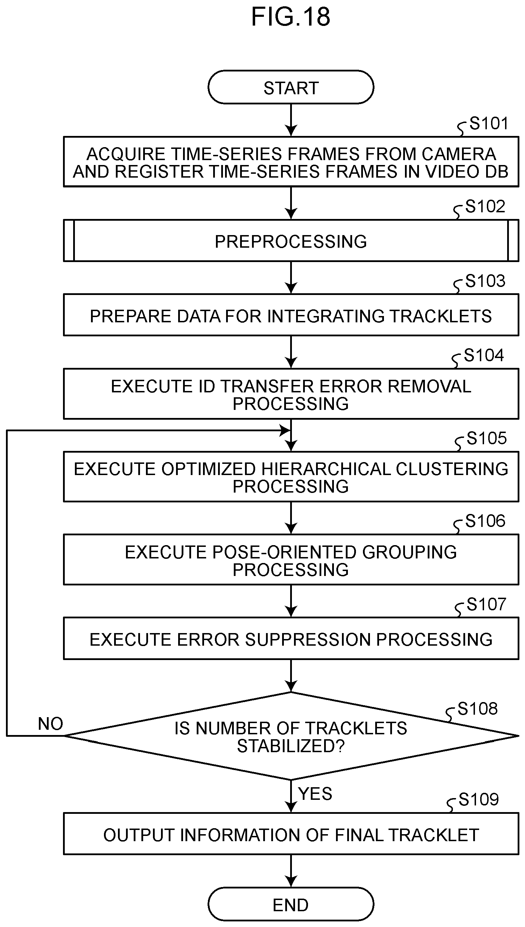

Next, an example of a processing procedure of the information processing apparatus 100 according to the present embodiment will be described. FIG. 18 is a flowchart illustrating a processing procedure of the information processing apparatus according to the present embodiment. As illustrated in FIG. 18, the acquisition unit 151 of the information processing apparatus 100 acquires time-series frames from the camera 31 and registers the frames in the video DB 141 (Step S101).

The preprocessing unit 152 of the information processing apparatus 100 executes preprocessing (Step S102). The global optimization processing unit 153 of the information processing apparatus 100 prepares data for integrating the tracklets (Step S103).

The global optimization processing unit 153 executes the ID transfer error removal processing (Step S104). The global optimization processing unit 153 executes the optimized hierarchical clustering processing (Step S105).

The global optimization processing unit 153 executes the pose-oriented grouping processing (Step S106). The global optimization processing unit 153 executes the error suppression processing (Step S107).

In a case where the number of tracklets is not stabilized (Step S108, No), the global optimization processing unit 153 proceeds to Step S105. On the other hand, in a case where the number of tracklets is stabilized (Step S108, Yes), the global optimization processing unit 153 outputs information of the final tracklet (Step S109).

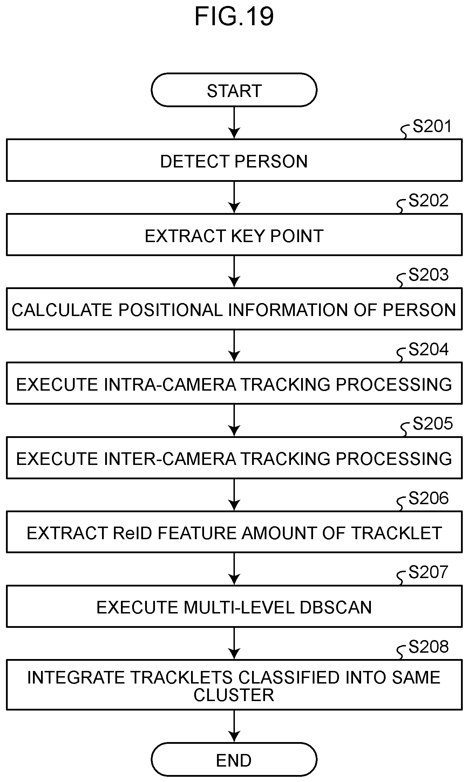

Next, a processing procedure of the preprocessing illustrated in Step S102 of FIG. 18 will be described. FIG. 19 is a flowchart illustrating a processing procedure of the preprocessing. The preprocessing unit 152 of the information processing apparatus 100 detects a person (Step S201). The preprocessing unit 152 extracts key points (Step S202).

The preprocessing unit 152 calculates positional information of a person (Step S203). The preprocessing unit 152 executes the intra-camera tracking processing (Step S204). The preprocessing unit 152 executes the inter-camera tracking processing (Step S205).

The preprocessing unit 152 extracts the ReID feature amount of the tracklet (Step S206). The preprocessing unit 152 executes multi-level DBSCAN (Step S207). The preprocessing unit 152 integrates the tracklets classified into the same cluster (Step S208).

Note that the processing procedure of the ID transfer error removal processing illustrated in Step S103 of FIG. 18 corresponds to the processing procedure illustrated in FIG. 5. The processing procedure of the optimized hierarchical clustering processing illustrated in Step S105 of FIG. 18 corresponds to the processing procedure illustrated in FIG. 9. The processing procedure of the pose-oriented grouping processing illustrated in Step S106 of FIG. 18 corresponds to the processing procedure illustrated in FIG. 10. The processing procedure of the error suppression processing illustrated in Step S107 of FIG. 18 corresponds to the processing procedure illustrated in FIG. 14.

Next, effects of the information processing apparatus 100 according to the present embodiment will be described. The information processing apparatus 100 executes the ID transfer error removal processing on a plurality of tracklets generated by the preprocessing. After executing the ID transfer error removal processing, the information processing apparatus 100 executes the optimized hierarchical clustering processing, the pose-oriented grouping processing, and the error suppression processing. The information processing apparatus 100 repeatedly executes the optimized hierarchical clustering processing, the pose-oriented grouping processing, and the error suppression processing until the tracklets are stabilized. As a result, it is possible to accurately generate trajectory information.

As described in the optimized hierarchical clustering processing, the information processing apparatus 100 calculates the silhouette score while changing the cluster threshold value, and generates a plurality of clusters (representative clusters) having the maximum average value of the silhouette scores. Thereby, an optimal cluster can be generated without adjusting a unique threshold value for each data set.

As described in the error suppression processing, the information processing apparatus 100 selects a plurality of tracklets appearing in the common camera, divides the tracklet in the time-overlapping region into a plurality of tracklets with respect to the selected tracklet, and recombines the tracklets using the similarity degree of the ReID feature amount of each tracklet. As a result, it is possible to solve the problem in the related art that tracklets that appear in the same camera and overlap in time remain connected.

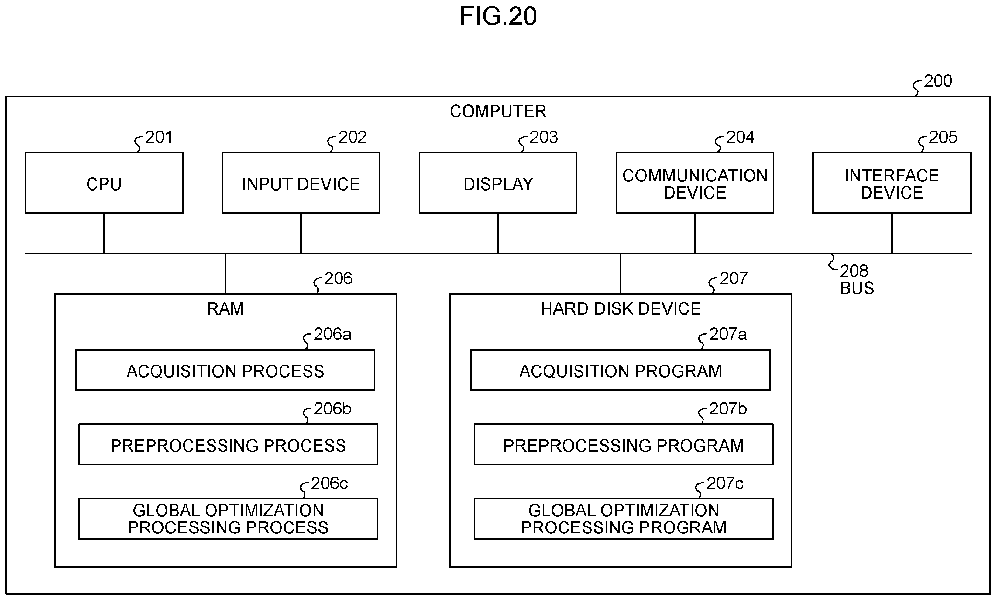

Next, an example of a hardware configuration of a computer that implements functions similar to those of the information processing apparatus 100 described above will be described. FIG. 20 is a diagram illustrating an example of a hardware configuration of a computer that implements functions similar to those of the information processing apparatus according to the embodiment.

As illustrated in FIG. 20, a computer 200 includes a CPU 201 that executes various kinds of arithmetic processing, an input device 202 that receives an input of data from a user, and a display 203. In addition, the computer 200 includes a communication device 204 that exchanges data with the camera 31, an external device, and the like via a wired or wireless network, and an interface device 205. In addition, the computer 200 includes a RAM 206 that temporarily stores various kinds of information, and a hard disk device 207. The respective devices 201 to 207 are connected to a bus 208.

The hard disk device 207 includes an acquisition program 207a, a preprocessing program 207b, and a global optimization processing program 207c. The CPU 201 reads the programs 207a to 207c and develops the programs in the RAM 206.

The acquisition program 207a functions as an acquisition process 206a. The preprocessing program 207b functions as a preprocessing process 206b. The global optimization processing program 207c functions as a global optimization processing process 206c.

The processing of the acquisition process 206a corresponds to the processing of the acquisition unit 151. The processing of the preprocessing process 206b corresponds to the processing of the preprocessing unit 152. The processing of the global optimization processing process 206c corresponds to the processing of the global optimization processing unit 153.

Note that the programs 207a to 207c do not necessarily need to be stored in the hard disk device 207 from the beginning. For example, each program is stored in a "portable physical medium" such as a flexible disk (FD), a CD-ROM, a DVD, a magneto-optical disk, or an IC card inserted into the computer 200. Then, the computer 200 may read and execute the programs 207a to 207c.

It is possible to accurately generate trajectory information.

**Claims**

1. A trajectory generation program that causes a computer (100,200) to execute a process comprising:

   acquiring an analysis result of an image frame in which a person is included, for each camera that has captured the image frame;
   generating a fragmentary trajectory of the person included in the image frame based on the acquired analysis result;
   calculating a feature amount regarding an appearance of the person based on a plurality of image frames associated with the generated fragmentary trajectory;
   generating a plurality of representative clusters by clustering a plurality of specified fragmentary trajectories using a similarity of representative values of the calculated feature amounts of the plurality of image frames;
   generating a plurality of subclusters obtained by clustering each of the plurality of clustered trajectories in each of the generated representative clusters using representative values of a plurality of poses of the person; and
   setting the plurality of trajectories corresponding to the subcluster as a fragmentary trajectory of the same person based on a result of the plurality of generated subclusters.

2. The trajectory generation program according to claim 1, the trajectory generation program causing a computer (100,200) to repeatedly execute: processing of generating the plurality of representative clusters, processing of generating the plurality of subclusters, and processing of setting the fragmentary trajectory of the same person until the number of fragmentary trajectories of the same person is no longer changed.

3. The trajectory generation program according to claim 1,

   wherein the fragmentary trajectory has a plurality of partial trajectories, and
   the trajectory generation program causes a computer (100,200) to further execute processing of specifying a feature amount of an outlier from the plurality of feature amounts respectively calculated from the image frames corresponding to the plurality of partial trajectories, and separating the partial trajectory corresponding to the image frame, which serves as the basis for the calculation of the specified feature amount, from the fragmentary trajectory.

4.  The trajectory generation program according to claim 1, the trajectory generation program causing a computer (100,200) to further execute: processing of specifying a processing target trajectory, which is a trajectory of a portion captured by the same camera from the fragmentary trajectory of the same person set by the setting processing and is a trajectory overlapping in time, separating the processing target trajectory into a plurality of partial trajectories, and integrating again the plurality of partial trajectories based on the plurality of feature amounts respectively calculated from the image frames corresponding to the plurality of partial trajectories.

5.  The trajectory generation program according to claim 1, wherein the processing of generating the plurality representative clusters generates the plurality of representative clusters by clustering the plurality of fragmentary trajectories using a cluster threshold value as a reference for determining whether to classify into the same representative cluster, and further calculates a silhouette score indicating a quality of the plurality of generated representative clusters.

6.  The trajectory generation program according to claim 5, wherein the processing of generating the plurality of representative clusters calculates the silhouette score while changing the cluster threshold value, and generates the plurality of representative clusters having the maximum silhouette score.

7.  The trajectory generation program according to claim 1, the trajectory generation program causing a computer(100,200) to further execute: processing of generating a movement trajectory of a person from an entrance of a facility to an exit of the facility using the set fragmentary trajectories of the same person, and displaying the generated movement trajectory of the person on a display device.

8.  A trajectory generation method executed by a computer (100,200), the trajectory generation method comprising:

    acquiring an analysis result of an image frame in which a person is included, for each camera that has captured the image frame;
    generating a fragmentary trajectory of the person included in the image frame based on the acquired analysis result;
    calculating a feature amount regarding an appearance of the person based on a plurality of image frames associated with the generated fragmentary trajectory;
    generating a plurality of representative clusters by clustering a plurality of specified fragmentary trajectories using a similarity of representative values of the calculated feature amounts of the plurality of image frames;
    generating a plurality of subclusters obtained by clustering each of the plurality of clustered trajectories in each of the generated representative clusters using representative values of a plurality of poses of the person; and
    setting the plurality of trajectories corresponding to the subcluster as a fragmentary trajectory of the same person based on a result of the plurality of generated subclusters.

9.  An information processing apparatus comprising:

    a control unit (150) configured to
    acquire an analysis result of an image frame in which a person is included, for each camera that has captured the image frame,
    generate a fragmentary trajectory of the person included in the image frame based on the acquired analysis result,
    calculate a feature amount regarding an appearance of the person based on a plurality of image frames associated with the generated fragmentary trajectory,
    generate a plurality of representative clusters by clustering a plurality of specified fragmentary trajectories using a similarity of representative values of the calculated feature amounts of the plurality of image frames,
    generate a plurality of subclusters obtained by clustering each of the plurality of clustered trajectories in each of the generated representative clusters using representative values of a plurality of poses of the person, and
    set the plurality of trajectories corresponding to the subcluster as a fragmentary trajectory of the same person based on a result of the plurality of generated subclusters.

10. The information processing apparatus according to claim 9, wherein the control unit (150) is configured to repeatedly execute processing of generating the plurality of representative clusters, processing of generating the plurality of subclusters, and processing of setting a fragmentary trajectory of the same person until the number of fragmentary trajectories of the same person is no longer changed.

# FIG.1

INTRA-CAMERA
TRACKING

INTER-CAMERA
TRACKING

EP 4 672 144 A1

# FIG.2

31-1

31-2

31-3

31-n

30

32

100

INFORMATION
PROCESSING
APPARATUS

FIG.3A

PERSON DETECTION PROCESSING

INTRA-CAMERA TRACKING PROCESSING

INTER-CAMERA TRACKING PROCESSING

EP 4 672 144 A1

# FIG.3B

ID TRANSFER ERROR REMOVAL PROCESSING

REPEATED EXECUTION UNTIL TRACKLETS ARE STABILIZED

OPTIMIZED HIERARCHICAL CLUSTERING PROCESSING → POSE-ORIENTED GROUPING PROCESSING → ERROR SUPPRESSION PROCESSING

# FIG.4

15

10a          10b

# FIG.5

START

↓

S10

CALCULATE ReID SIMILARITY MATRIX $S_{NN}$
ON BASIS OF TARGET TRACKLET

↓

S11

EXECUTE FIRST OUTLIER REMOVAL
PROCESSING ON ReID SIMILARITY MATRIX $S_{NN}$
AND GENERATE MATRIX $S_m$

↓

S12

EXECUTE SECOND OUTLIER REMOVAL
PROCESSING ON MATRIX $S_m$ AND
SEPARATE TRACKLET OF
PORTION CORRESPONDING TO
OUTLIER FROM TARGET TRACKLET

↓

END

# FIG.6

15

10a

10b

$S_{NN}$

$S_m$

$$\begin{bmatrix} 1 \times 1, \dots\dots\dots, 1 \times N \\ \vdots \\ N \times 1, \dots\dots\dots N \times N \end{bmatrix} \longrightarrow \begin{bmatrix} m_1 \\ \vdots \\ m_N \end{bmatrix}$$

# FIG.7

FIG.8

# FIG.9

START

S20
ACQUIRE PLURALITY OF TRACKLETS GENERATED IN PREVIOUS PROCESSING

S21
CALCULATE AVERAGE VALUE OF ReID FEATURE AMOUNTS OF TRACKLETS FOR EACH ID

S22
SET MINIMUM CLUSTER THRESHOLD VALUE

S23
CLUSTER EACH TRACKLET ON BASIS OF CLUSTER THRESHOLD VALUE

S24
SET LABEL FOR EACH CLUSTER

S25
CALCULATE AVERAGE VALUE OF SILHOUETTE SCORES

S26
STORE AVERAGE VALUE OF SILHOUETTE SCORES AND CLUSTERING RESULT IN ASSOCIATION WITH EACH OTHER IN LIST

S27
ADD PREDETERMINED VALUE TO CLUSTER THRESHOLD VALUE AND UPDATE CLUSTER THRESHOLD VALUE

S28
HAS CLUSTER THRESHOLD VALUE REACHED MAXIMUM VALUE?

NO

YES

S29
GENERATE CLUSTER HAVING MAXIMUM AVERAGE VALUE OF SILHOUETTE SCORES ON BASIS OF LIST

END

# FIG.10

```
        ┌─────────────┐
        │    START    │
        └─────────────┘
               │
               ▼                              ⌐S30
┌──────────────────────────────────────────┐
│   EXECUTE POSE CLASSIFICATION ON EACH     │
│                TRACKLET                    │
└──────────────────────────────────────────┘
               │
               ▼                              ⌐S31
┌──────────────────────────────────────────┐
│   CALCULATE SIMILARITY DEGREE SCORE OF    │
│                POSE LEVEL                  │
└──────────────────────────────────────────┘
               │
               ▼                              ⌐S32
┌──────────────────────────────────────────┐
│  EXECUTE MATCHING IN WHICH TWO TRACKLETS  │
│               ARE PAIRED                   │
└──────────────────────────────────────────┘
               │
               ▼                              ⌐S33
┌──────────────────────────────────────────┐
│           EXECUTE SUBCLUSTERING           │
└──────────────────────────────────────────┘
               │
               ▼
        ┌─────────────┐
        │     END     │
        └─────────────┘
```

# FIG.11

HUMAN BODY DIRECTION
SCORE

FRONT
DIRECTION

BACK DIRECTION

SIDE DIRECTION

~20-1

~20-2

20-3~

"FRONT"

"BACK"

"SIDE"

# FIG.12

FIG.13

# FIG.14

START

↓ S40

SELECT TRACKLET APPEARING IN
COMMON CAMERA

↓ S41

DIVIDE TRACKLET INTO PLURALITY OF
ELEMENT TRACKLETS

↓ S42

COMPARE ReID FEATURE AMOUNTS OF
RESPECTIVE ELEMENT TRACKLETS

↓ S43

INTEGRATE AGAIN ELEMENT TRACKLETS
ON BASIS OF COMPARISON RESULT OF
ReID FEATURE AMOUNTS

↓

END

# FIG.15

Long_tri 1

A1

Long_tri 2

SA

T_Trk 1    T_Trk 2    T_Trk 3    T_Trk 4

SC

SB

C_Trk 1    C_Trk 2    C_Trk 3

SD

SA>SB    SC>SD

T_Trk 1    T_Trk 2    T_Trk 3    T_Trk 4    C_Trk 2    C_Trk 3

C_Trk 1

EP 4 672 144 A1

# FIG.16

BEFORE EXECUTION OF ERROR
SUPPRESSION PROCESSING

AFTER EXECUTION OF ERROR
SUPPRESSION PROCESSING

EP 4 672 144 A1

# FIG.17

INFORMATION PROCESSING APPARATUS *100*

CONTROL UNIT *150*

STORAGE UNIT *140*

COMMUNICA-TION UNIT *110*

INPUT UNIT *120*

DISPLAY UNIT *130*

ACQUISITION UNIT *151*

PREPROCESSING UNIT *152*

GLOBAL OPTIMIZATION PROCESSING UNIT *153*

VIDEO DB *141*

TRAJECTORY DB *142*

# FIG.18

START

S101

ACQUIRE TIME-SERIES FRAMES FROM CAMERA AND REGISTER TIME-SERIES FRAMES IN VIDEO DB

S102

PREPROCESSING

S103

PREPARE DATA FOR INTEGRATING TRACKLETS

S104

EXECUTE ID TRANSFER ERROR REMOVAL PROCESSING

S105

EXECUTE OPTIMIZED HIERARCHICAL CLUSTERING PROCESSING

S106

EXECUTE POSE-ORIENTED GROUPING PROCESSING

S107

EXECUTE ERROR SUPPRESSION PROCESSING

S108

IS NUMBER OF TRACKLETS STABILIZED?

NO

YES

S109

OUTPUT INFORMATION OF FINAL TRACKLET

END

# FIG.19

START

↓ S201

DETECT PERSON

↓ S202

EXTRACT KEY POINT

↓ S203

CALCULATE POSITIONAL INFORMATION OF PERSON

↓ S204

EXECUTE INTRA-CAMERA TRACKING PROCESSING

↓ S205

EXECUTE INTER-CAMERA TRACKING PROCESSING

↓ S206

EXTRACT ReID FEATURE AMOUNT OF TRACKLET

↓ S207

EXECUTE MULTI-LEVEL DBSCAN

↓ S208

INTEGRATE TRACKLETS CLASSIFIED INTO SAME CLUSTER

↓

END

# FIG.20

COMPUTER 200

| | | | | |
|---|---|---|---|---|
| CPU 201 | INPUT DEVICE 202 | DISPLAY 203 | COMMUNICATION DEVICE 204 | INTERFACE DEVICE 205 |

208 BUS

RAM 206

ACQUISITION PROCESS 206a

PREPROCESSING PROCESS 206b

GLOBAL OPTIMIZATION PROCESSING PROCESS 206c

HARD DISK DEVICE 207

ACQUISITION PROGRAM 207a

PREPROCESSING PROGRAM 207b

GLOBAL OPTIMIZATION PROCESSING PROGRAM 207c

FIG.21

Europäisches
Patentamt

European
Patent Office

Office européen
des brevets

# EUROPEAN SEARCH REPORT

**Application Number**

EP 25 18 3272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG HSIANG-WEI ET AL: "Enhancing Multi-Camera People Tracking with Anchor-Guided Clustering and Spatio-Temporal Consistency ID Re-Assignment", 2023 IEEE/CVF CONFERENCE ON COMPUTER VISION AND PATTERN RECOGNITION WORKSHOPS (CVPRW), IEEE, 17 June 2023 (2023-06-17), pages 5239-5249, XP034398149, DOI: 10.1109/CVPRW59228.2023.00552 [retrieved on 2023-08-15] * abstract; figures 2,4 * * sections "3.2. Anchor-Guided Clustering", "3.3. Spatio-Temporal Consistency ID Reassignment", "4.6. Tracking", "4.7. Results on AI City Challenge" * | 1-10 | INV. G06T7/292 |
| A | JIANJUN GAO ET AL: "OccluTrack: Rethinking Awareness of Occlusion for Enhancing Multiple Pedestrian Tracking", ARXIV.ORG, CORNELL UNIVERSITY LIBRARY, 201 OLIN LIBRARY CORNELL UNIVERSITY ITHACA, NY 14853, 19 September 2023 (2023-09-19), XP091617598, * abstract * * sections "III.A. Overview", "III.C.b) Pose-guided Feature Extractor" * | 1-10 | |
|  |  |  | TECHNICAL FIELDS SEARCHED (IPC) |
|  |  |  | G06T |

The present search report has been drawn up for all claims

| Place of search | Date of completion of the search | Examiner |
|---|---|---|
| Munich | 11 November 2025 | Eckert, Lars |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024008869 A
- US 11024043 B
- US 20210240851
- JP 2019185615 A